Europäisches Patentamt

European Patent Office

Office européen des brevets

Veröffentlichungsnummer: **0 275 009**
**A2**

## EUROPÄISCHE PATENTANMELDUNG

Anmeldenummer: 88100029.3

Anmeldetag: 05.01.88

Int. Cl.4 **C08G 18/32** , C08G 18/50 , C08G 18/65 , C08G 18/70 , C08G 18/80

Priorität: 10.01.87 DE 3700572

Veröffentlichungstag der Anmeldung: 20.07.88 Patentblatt 88/29

Benannte Vertragsstaaten: BE DE ES FR GB IT NL SE

Anmelder: **BAYER AG**

**D-5090 Leverkusen 1, Bayerwerk(DE)**

Erfinder: **Kopp, Richard, Dr.**
**Bilharzstrasse 15**
**D-5000 Köln 80(DE)**
Erfinder: **Grögler, Gerhard, Dr.**
**von-Diergardt-Strasse 48**
**D-5090 Leverkusen(DE)**
Erfinder: **Hess, Heinrich, Dr.**
**Körnerstrasse 5**
**D-5090 Leverkusen(DE)**
Erfinder: **Schäfer, Hermann, Dr.**
**Sürderstrasse 27**
**D-5090 Leverkusen(DE)**
Erfinder: **Rasshofer, Werner, Dr.**
**Leopold-Gmelin-Strasse 31**
**D-5000 Köln 80(DE)**

**Kunststoff-Verbundkörper und ein Verfahren zu seiner Herstellung.**

Ein Kunststoff-Verbundkörper besteht aus

1. einem Kunststoff-Schaumstoff und
2. einer mit ihm verbundenen, gegebenenfalls geschäumten Polyurethanaußenschicht, die durch thermisches Aushärten eines lagerstabilen, reaktionsfähigen Polyurethan-Einkomponentensystems, enthaltend

A) feinteilige Polyisocyanate, deren NCO-Gruppen zu 0,1 bis 25 Äquivalentprozent in an sich bekannter Weise durch Reaktion mit Polyaminen, Hydrazinen, Alkylhydrazinen, Hydraziden, Amidinen und/oder Guanidinen desaktiviert worden sind,

B) Polyamine und/oder Polyole mit Molekulargewichten von 400 bis 8000,

C) gegebenenfalls aromatische Polyamine mit Molekulargewichten von 108 bis 399 und/oder aliphatische und/oder cycloaliphatische Polyole mit Molekulargewichten von 62 bis 399 als Kettenverlängerungsmittel,

D) gegebenenfalls Katalysatoren und

E) gegebenenfalls Hilfs-und Zusatzstoffe, hergestellt worden ist.

EP 0 275 009 A2

## Kunststoff-Verbundkörper und ein Verfahren zu seiner Herstellung

Kunststoff-Verbundkörper mit einer massiven, dünnen Außenschicht und einer geschäumten Hinterschicht finden heute einen ausgedehnten Einsatz bei der Herstellung von KFZ-Innenteilen, wie z.B. Armaturenbrettern, Mittelkonsolen, Armstützen oder Türseitenverkleidungen.

Zur Herstellung dieser Kunststoff-Verbundteile wird im allgemeinen in einem ersten Herstellungsschritt in einer geeigneten Form die massive Außenschicht nach bekannten Verfahren aus einem Thermoplasten hergestellt, wie z.B. durch Tiefziehen einer ABS-Folie oder nach dem "Slush-molding"-Verfahren aus einem PVC-Weichmacher-Plastisol oder einem Polymerweichmacher enthaltenden PVC-Pulver, wobei oft eine PVC-Außenhaut wegen des angenehmeren Griffs einer ABS-Außenhaut gegenüber bevorzugt wird.

Die im ersten Schritt hergestellte, massive Außenhaut wird dann in einem zweiten Herstellungsschritt in derselben Form (Tiefziehverfahren) oder nach Übertragung in eine zweite Form ("Slush-molding"-Verfahren) mit einem geeigneten Kunststoff hinterschäumt. Wegen der hervorragenden Schäumbarkeit und der Variationsbreite der physikalischen Eigenschaften des Schaums werden für diese Hinterschäumung im allgemeinen Polyurethan(harnstoff)-systeme eingesetzt.

Bei diesen Kunststoff-Verbundkörpern treten jedoch unter bestimmten Belastungen - schwerwiegende Probleme auf, insbesondere bei PVC-Außenhäuten. Das PVC enthält Stabilisatoren und Weichmacher, die einen gewissen Dampfdruck aufweisen und damit zu unangenehmen Geruchsbelästigungen und einem ständigen Beschlagen der Autofensterscheiben von innen führen können.

Desweiteren treten bei thermischer Belastung des Verbundmaterials (Armaturenbretter können sich je nach Farbe und Sonneneinstrahlung auf Oberflächentemperaturen >100°C erwärmen) erhebliche Wechselwirkungen zwischen Außenhaut und Hinterschäumung auf, die zu Delaminierungen, einer Versprödung der Außenhaut und einem Abbau des Hinterfüllschaums führen können.

Es hat deshalb bereits verschiedene Ansätze gegeben, diesen Mangel zu beseitigen, wie z.B. durch die Wahl spezieller Stabilisatoren für die PVC-Außenhaut oder durch die Anbringung einer Zwischenschicht zwischen Außenhaut und Hinterfüllschaum, die eine Migration von Weichmachern und Additiven verhindern soll (vgl. EP 0 161 477).

Diese Maßnahmen schränken aber die Auswahl der Additive wesentlich ein und/oder führen zu zusätzlichen, verteuernden Arbeitsschritten und verbessern die bestehenden Delaminierungsprobleme nicht wesentlich.

Man hat erwogen, massive Außenhaut und Hinterschäumung aus einem Polyurethansystem in Form eines sogenannten Integralschaums mit verdichteter Randzone nach dem Reaktions-Injektions-Verfahren (RIM-Verfahren) in einem Arbeitsgang herzustellen. Dieses Verfahren bietet aber in diesem Fall, trotz der Zeitersparnis, einige Nachteile: Außenhaut und Hinterschäumung würden aus demselben Material bestehen, d.h. es wäre nicht möglich, die Außenhaut z.B. aus einem lichtechten, eingefärbten System und die Hinterschäumung aus einem einfachen, preiswerten System herzustellen oder für die beiden Schichten Systeme mit verschiedenen mechanischen Eigenschaften einzusetzen. Außerdem wäre es schwierig, die Dicke der Außenhaut in weiten Grenzen beliebig einzustellen. Die teilweise großen und komplizierten Hinterschnitte der herzustellenden Formteile würden ebenfalls ein gewisses Problem für den Formenbau darstellen.

Eine weitere Alternative zur Herstellung einer Polyurethan-Außenhaut stellt das sogenannte "IMC-Verfahren" (In-mold-Coating) dar, bei der die Form zunächst mit einer 1-oder 2-Komponenten-Spritzmaschine auf der Innenseite mit einer Schicht von üblicherweise wenigen Zehntelmillimeter-Dicke besprüht wird. Allerdings bereitet hier der gleichmäßige, gezwungenermaßen geringe Auftrag durch einen Sprüh-bzw. Mischkopf erhebliche Probleme. Die Beschichtungsmaterialien neigen dazu, an senkrechten Wandungen abzulaufen. Formenhinterschneidungen sind nach diesem Verfahren praktisch nicht zu realisieren.

Auch das Tiefziehen einer Polyurethanfolie stellt ein Verfahren zur Herstellung einer Polyurethan-Außenhaut dar. Allerdings treten hierbei dieselben Probleme wie beim Tiefziehen von Folien aus anderen Materialien auf: die tiefgezogene Außenschicht weist eine ungleichmäßige Dicke auf (verschiedener Streckgrad) und komplizierte Formgeometrien wie z.B. Hinterschnitte, sind praktisch nicht zu realisieren.

Eine Polyurethanaußenhaut könnte auch durch "Slush-molding" eines Polyurethanthermoplastpulvers hergestellt werden. Dieses Verfahren ist bei PVC-Pulvern bekannt. Es wären aber hierbei wie auch bei den PVC-Pulvern Formtemperaturen über 180°C erforderlich, was zu sehr hohen Energiekosten führen würde.

Es wurde nun überraschend gefunden, daß die geschilderten Verarbeitungs-und Eigenschaftsprobleme gelöst werden können, wenn für einen Kunststoff-Schaumstoff, vorzugsweise Polyurethan-Schaumstoff, eine Außenhaut aus einem speziellen Polyurethanmaterial eingesetzt wird, und zwar eine Außenhaut, die aus einem Polyurethan-Einkomponentensystem hergestellt wurde. Diese Systeme können bei niedrigen Temperaturen (im allgemeinen ca. 100°C) zu beliebig geformten Teilen gehärtet werden und es treten wegen der ähnlichen Aufbaukomponenten und Additive keine abbauenden Wechselwirkungen zwischen den beiden Schichten auf und außerdem ist die Haftung zwischen den beiden Schichten als hervorragend einzustufen.

Gegenstand der Erfindung ist ein Kunststoff-Verbundkörper, bestehend aus

1. einem Kunststoff-Schaumstoff und

2. einer mit ihm verbundenen, gegebenenfalls geschäumten Polyurethanaußenschicht, die durch thermisches Aushärten eines lagerstabilen, reaktionsfähigen Polyurethan-Einkomponentensystems, enthaltend

A) feinteilige Polyisocyanate, deren NCO-Gruppen zu 0,1 bis 25 Äquivalentprozent in an sich bekannter Weise durch Reaktion mit Polyaminen, Hydrazinen, Alkylhydrazinen, Hydraziden, Amidinen und/oder Guanidinen desaktiviert worden sind,

B) Polyamine und/oder Polyole mit Molekulargewichten von 400 bis 8000, vorzugsweise 800 bis 3000,

C) gegebenenfalls aromatische Polyamine mit Molekulargewichten von 108 bis 399 und/oder aliphatische und/oder cycloaliphatische Polyole mit Molekulargewichten von 62 bis 399 als Kettenverlängerungsmittel,

D) gegebenenfalls Katalysatoren und

E) gegebenenfalls Hilfs-und Zusatzstoffe, hergestellt worden ist.

Die Erfindung betrifft ferner ein Verfahren zur Herstellung eines Kunststoff-Verbundkörpers, bestehend aus

1. einem Kunststoff-Schaumstoff und

2. einer gegebenenfalls geschäumten Polyurethanaußenschicht, dadurch gekennzeichnet, daß ein lagerstabiles, reaktionsfähiges Polyurethan-Einkomponentensystem, enthaltend

A) feinteilige Polyisocyanate, deren NCO-Gruppen zu 0,1 bis 24 Äquivalentprozent in an sich bekannter Weise durch Reaktion mit Polyaminen, Hydrazinen, Alkylhydrazinen, Hydraziden, Amidinen und/oder Guanidinen desaktiviert worden sind,

B) Polyamine und/oder Polyole mit Molekulargewichten von 400 bis 8000, vorzugsweise 800 bis 3000,

C) gegebenenfalls aromatische Polyamine mit Molekulargewichten von 108 bis 399 und/oder aliphatische und/oder cycloaliphatische Polyole mit Molekulargewichten von 62 bis 399 als Kettenverlängerungsmittel,

D) gegebenenfalls Katalysatoren und

E) gegebenenfalls übliche Hilfs-und Zusatzstoffe, thermisch ausgehärtet und mit dem Kunststoff-Schaumstoff verbunden wird.

Ein erfindungsgemäß bevorzugtes Verfahren besteht darin, daß man zuerst an der inneren Wandung einer Form die Polyurethanaußenschicht erzeugt, sie dann entformt, die so erhaltene Polyurethanschicht in eine zweite Form einbringt und darin die Polyurethanaußenschicht mit dem Kunststoff-Schaumstoff hinterschäumt.

Vorzugsweise ist der Kunststoff-Schaumstoff ein Polyurethan-Schaumstoff.

Geeignete Polyurethan-Einkomponenten-Systeme, die bei Raumtemperatur als flüssige oder feste Dispersionen vorliegen, und deren Herstellung und allgemeine Verwendung sind an sich bekannt und werden z.B. in DE-OS 3 230 757 EP-A 103 323; DE-OS 3 403 500/EP-A 150 790; DE-OS 3 418 430/EP-A 162 364; DE-OS 3 419 429/EP-A 165 437; DE-OS 3 112 054/EP-PS 62 780: DE-OS 3 228 670/ EP-A 100 507; DE-OS 3 228 724/EP-A 100 507; DE-OS 3 228 723/EP-A 100 508 und DE-OS 3 343 124/EP-A 145 999 beschrieben.

Diese erhalten

A) oberflächenmodifizierte, feinteilige Polyisocyanate, welche zu 0,1 bis 25 Äquivalentprozent der NCO-Gruppen der festen feinteiligen Polyisocyanate an der Oberfläche, vorzugsweise durch Reaktion mit Polyaminen, Hydrazinen, Alkylhydrazinen, Hydrazidverbindungen, Amidin-und/oder Guanidinverbindungen, desaktiviert sind,

B) höhermolekulare, aliphatische und/oder aromatische Polyamine oder höhermolekulare Polyole mit Molekular gewichten von 400 bis 8000, vorzugsweise 800 bis 3000, gegebenenfalls zusätzlich noch Polyole vom Molekulargewicht 8001 bis 12 000, gegebenenfalls

C) Kettenverlängerungsmittel in Form von aromstischen Polyaminen mit Molekulargewichten von 108 bis 399 und/oder aliphatischen und/oder cycloaliphatischen Polyolen mit Molekulargewichten von 62 bis 399, gegebenenfalls

D) aus der Polyurethan-Chemie an sich bekannte Katalysatoren und gegebenenfalls

E) übliche Hilfs-und Zusatzstoffe wie z.B. Mittel zur Fließverbesserung, zur Verbesserung der Entgasung, zur Verminderung der Haftung auf der Formwand, zur Verbesserung der Adhäsion an der Hinterschäumung oder an aufzubringenden Lackschichten, Farbstoffe, Füllstoffe, Weichmacher, Antistatika, Lichtschutzmittel, Antioxidantien, Treibmittel, Tenside, Flammschutzmittel, fungizide oder bakterizide Substanzen.

Als Ausgangskomponenten für die erfindungsgemäß eingesetzten, oberflächenmodifizierten, stabilisierten, festen Polyisocyanate A) sind alle Di- oder Polyisocyanate oder deren beliebige Gemische geeignet, sofern sie einen Schmelzpunkt oberhalb 40°C, bevorzugt oberhalb 80°C, besonders bevorzugt oberhalb 130°C aufweisen.

Besonders bevorzugt werden dimeres 1-Methyl-2,4-diisocyanatobenzol, dimeres 4,4'-Diisocyanato-diphenylmethan, 3,3'-Dimethyl-4,4'-diisocyanato-diphenyl, der 3,3'-Diisocyanato-4,4'-dimethyl-N,N'-diphenylharnstoff, der Bis-N,N'-[4-(4-Isocyanatophenylmethyl)-phenyl]-harnstoff, 1,5-Naphthalin-diisocyanat und 1,4-Phenylen-di isocyanat. Die dimeren Diisocyanate können auch durch "in situ"-Dimerisierung, in z.B. Weichmachern, Lösungsmitteln, Wasser oder Polyolen feinverteilt hergestellt und gegebenenfalls in dieser Form der "Stabilisierung" unterworfen werden.

Als "Stabilisatoren" für die genannten Polyisocyanate werden neben den Hydrazinen, Alkylhydrazinen, Hydraziden, Amidinen und/oder Guanidinen oft zwei-oder mehrfunktionelle, nieder-oder höhermolekulare Verbindungen mit aliphatisch gebundenen, primären und/oder sekundären Aminogruppen und einem Molekulargewicht von 60 bis etwa 6000, vorzugsweise 60 bis 3000, eingesetzt, wie z.B. Ethylendiamin, 1,6-Diaminohexan, Diethylentriamin, Isophorondiamin oder Bis-(4-amino-3-methyl-cyclohexyl)-methan.

Die "Stabilisatoren" werden in der Regel in einer Menge von 0,1 bis 25 Äquivalentprozent pro Äquivalent NCO, vorzugsweise 0,1 bis 8 Äquivalentprozent, besonders bevorzugt 0,3 bis 3 Äquivalentprozent, eingesetzt.

Die Stabilisierung des bei Raumtemperatur festen Isocyanats erfolgt in der Regel innerhalb weniger Minuten, so daß auch eine kontinuierliche Arbeitsweise bei der Stabilisierungsreaktion möglich ist.

Als Komponente B kommen erfindungsgemäß in Frage:

1) Polyaminoverbindungen mit 2 bis 4, vorzugsweise 2 oder 3 aromatischen Aminogruppen und einem Molekulargewicht von 400 bis 8000, insbesondere solche Polyaminoverbindungen, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in DE-A 2 948 419, DE-A 3 039 600, DE-A 3 112 118, der EP-A 61 627, EP-A 71 132, EP-A 71 139 und 97 869 angegeben. In der erstgenannten Patentschrift werden auch weitere Verfahren des Standes der Technik zur Herstellung von aromatischen Aminoverbindungen höhermolekularer Struktur genannt, wie sie für das erfindungsgemäße Verfahren geeignet sind. Es handelt sich bei dem Verfahren nach DE-A 2 948 419 und den anderen zitierten Patentschriften vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die aromatischen, höhermolekularen Polyamine können jedoch auch nach anderen Verfahren. z.B. durch Umsetzung von NCO-Prepolymeren mit überschüssigen Mengen an Hydrazin. Aminophenylethylamin, oder anderen Diaminen entsprechend DE-AS 1 694 152 hergestellt werden; eine andere Möglichkeit beschreibt die FR-PS 1 415 317 durch Überführung der NCO-Prepolymere mit Ameisensäure in die N-Formylderivate und deren Verseifung. Auch die Umsetzung von NCO-Prepolymeren mit Sulfaminsäure gemäß DE-AS 1 155 907 führt zu höhermolekularen Polyaminen. Neben an aromatische Reste gebundenen Aminogruppen (aus aromatischen Polyisocyanaten) lassen sich auch (über aliphatische Polyisocyanate) höher molekulare Polyaminoverbindungen mit an aliphatische Reste gebundenen Aminogruppen herstellen. Die höhermolekularen Polyamine können auch durch Reaktion mit unterschüssigen Mengen an Diisocyanaten vorverlängert werden.

2) Polyhydroxylverbindungen mit 2 bis 8, vorzugsweise 2 bis 4, Hydroxylgruppen und einem Molekulargewicht von 400 bis 8000, die sowohl als Suspendierungsmedium für die Polyisocyanate, wie auch als Reaktivkomponenten eingesetzt werden. Dies sind mindestens zwei Hydroxylgruppen aufweisende Polyester, Polyether, Polythioether, Polyacetale, Polycarbonate, Polylactone oder Polyesteramide, sowie auch Polybutadienverbindungen oder ihre Mischungen, wie sie für die Herstellung von homogenen, gegebenenfalls zellförmigen oder schaumstoffartigen Polyurethanen an sich bekannt und in der DE-OS 2 920 501 aufgeführt sind. Besonders bevorzugt sind Polyether und Polyester.

Weitere Vertreter derartiger Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.

Es ist selbstverständlich möglich, Mischungen der o.g. Polyamino-oder Polyhydroxylverbindungen einzusetzen. Als Komponente C) kommen erfindungsgemäß in Frage:

1) Aromatische Polyamine vom Molekulargewicht 108 - 399, unter denen auch solche Amine verstanden werden, welche die Aminogruppe an heterocyclische Reste mit aromatischem Charakter gebunden enthalten. Beispielsweise seien genannt: p-Phenylendiamin, 2,4-2,6-Toluylendiamine, Diphenylmethan-4,4'-und/oder -2,4'-und/oder -2,2'-diamine, 3,3'-Dichlor-4,4'-diaminodiphenylmethan, 3-($C_1$-$C_8$)-Alkyl-4,4'-diaminodiphenylmethane, die 3,3'-Di-($C_1$-$C_4$)-alkyl-4,4'-diaminodiphenylmethane sowie die 3,3',5,5'-Tetra-($C_1$-$C_4$)-alkyl-4,4'-diphenylmethane, die 4,4'-Diaminodiphenyl-sulfide, -sulfoxide oder -sulfone, Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$-$C_4$)-Alkylgruppen substituierte Toluylendiamine. Besonders bevorzugt sind 3,5-Diethyl-2,4-und/oder -2,6-diaminotoluol (besonders ihre technischen (80/20)- oder (65/35)-Isomerengemische).

2) Aliphatische und/oder cycloaliphatische Polyole vom Molekulargewicht 62 - 399, z.B. Ethylenglykol, Trimethylenglykol, Butandiol-2,3-und/oder -1,4, Hexandiol-1,6, Neopentylglykol, 1,4-Bis-hydroxyethyl-cyclohexan, 1,4-Dihydroxycyclohexan, Terephthalsäure-bis-($\beta$-hydroxyethyl)-ester, 1,4,3,6-Dianhydrohexite, 1,4-Monoanhydrotetrite, sowie Diole mit sekundären Hydroxylgruppen, z.B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri-und Tetraethylen-, -propylen-und -butylenglykole, ferner Bis-(2-hydroxyethyl)-hydrochinon, Bis-(2-hydroxyethyl)-resorcin, Formose und Formit. Ferner sind geeignet tertiäraminhaltige Di-oder Polyole, z.B. N-Methyldiethanolamin, Triethanolamin oder N,N'-Bis-hydroxyethyl-piperazin.

Als Katalysatoren D) können die üblichen Polyurethankatalysatoren, mit besonders gutem Effekt aber organische Blei-und/oder Zinnverbindungen verwendet werden, gegebenenfalls unter Mitverwendung weiterer üblicher Polyurethankatalysatoren, insbesondere von tert.-Amin-haltigen Katalysatoren.

Mitverwendet werden ferner als Komponente E) die in der Polyurethanchemie an sich bekannten Hilfs-und Zusatzstoffe. Beispiele dafür sind bereits oben genannt worden.

Das NCO/($NH_2$ + OH)-Verhältnis (freies NCO aus z.B. mit Aminen stabilisiertem Polyisocyanat bzw. Summe aus freien und z.B. mit Amidin umgesetzten NCO-Gruppen) und gegebenenfalls weiterem, freiem Polyisocyanat. zu Amino-und oder OH-Gruppen aus höhermolekularen Polyaminen und/oder Polyolen B) und/oder Kettenverlängerungsmitteln C)) beträgt bei der Bildung der Außenhaut 0,5:1 bis 1,5:1, bevorzugt 0,8:1 bis 1,5:1, besonders bevorzugt 0,95:1 bis 1,2:1 (Angaben in Äquivalenten).

Die gegebenenfalls katalysatorhaltigen Einkomponentensysteme werden im wesentlichen durch Hitzestoß verfestigt. Bei Raumtemperatur oder wenig erhöhter Temperatur tritt auch in Gegenwart stark wirksamer Katalysatoren überraschenderweise keine Vernetzungsreaktion ein, so daß man auch katalysatorhaltige Mischungen als langzeitstabile Einkomponentensysteme bezeichnen muß.

Die Polyurethanaußenhaut wird aus diesen bei Raumtemperatur lagerstabilen Einkomponentensystemen in einer Dicke von 0,01 - 10 mm, i.a. 0,2 - 2,0 mm, vorzugsweise in einem ersten Verfahrensschritt hergestellt. Hierbei sind, je nach den vorgegebenen Parametern (Formteilgeometrie, Aggregatzustand der Einkomponentendispersion) verschiedene Verarbeitungsverfahren möglich, wie z.B. "Slush molding", Sprühen, Rakeln, Tauchen, Schleudern oder andere Verfahren nach dem Stand der Technik, wobei i.a. das "Slush-molding"-Verfahren zur Herstellung von Außenhäuten für KFZ-Innenteile bevorzugt wird. Hierbei wird eine Verarbeitungsvorrichtung aus einem Vorratsbehälter für das Einkomponentensystem und einer konturgebenden, beliebig geformten Halbschalenform eingesetzt.

Im Vorratsbehälter befindet sich eine genügende Menge des flüssigen oder feinpulvrigen Einkomponentensystems, um die Formhälfte mindestens vollständig zu füllen.

Zu Beginn des Verfahrenszyklus wird die auf die Aushärtungstemperatur des Einkomponentensystems vorgeheizte Formhälfte auf dem Vorratsbehälter mit dem Einkomponentensystem befestigt.

Dann wird die Vorrichtung so um eine horizontale Achse gedreht, daß sich die Formhälfte unter dem Vorratsbehälter befindet und vollständig mit dem Einkomponentensystem gefüllt wird, welches sofort an der heißen Formwand zu gelieren beginnt. Nach einer gewissen Zeit, in der eine ausreichend dicke Schicht geliert ist, wird die gesamte Einheit wieder in den Ausgangszustand zurückgeschwenkt.

Die Formhälfte mit der gelierten Außenschicht wird nach dem Ablaufen der nicht ausgehärteten Einkomponentenmischung abgenommen und gegebenenfalls in einem Ofen nachgeheizt. Danach kann die ausgehärtete Schicht, gegebenenfalls nach einem Abkühlschritt, der Formhälfte entnommen werden. Hierauf kann der gesamte Zyklus wieder von neuem begonnen werden.

Die eingesetzten Polyurethan-Einkomponentensysteme zeichnen sich gegenüber allen anderen Materialien und Verfahren durch folgende Vorteile aus:

- es können beliebige Formteilgeometrien realisiert werden

- das ausgehärtete Material weist hervorragende Verbundeigenschaften in Kombination mit Polyurethanhinterschäumen auf,

- die Endeigenschaften können in einem weiten Bereich variiert werden,

- das Produkt weist keine flüchtigen Bestandteile auf,

- die Aushärtung erfolgt unter sehr milden Bedingungen.

So ist z.B. für Schichtdicken von ca. 1 mm mit den beschriebenen Einkomponentenssstemen bei einer Formhälften temperatur von 110-140°C eine Aushärtezeit von ca. 1 - 4 min erforderlich. Die energieschonenden Bedingungen sind ein wesentlicher Vorteil gegenüber anderen Materialien, insbesondere Thermoplasten, die im allgemeinen Verarbeitungstemperaturen ≧250°C erfordern, wie z.B. Polyethylen bei 275°C (s. EP 0 047 038, EP 0 047 039) oder PVC-Plastisole bei ≧280°C (s. JA 55/025 390 = Derwent Abstract OD-80/024 535).

Die in der ersten Verfahrensstufe hergestellte Außenhaut wird dann in eine zweite Werkzeugschale eingelegt und mit den gegebenenfalls erforderlichen Kunststoff-oder Metalleinlegeteilen versehen. Das Ausschäumen geschieht rückseitig über ein Fülloch in das geschlossene Werkzeug.

Verfahren und geeignete Polyurethanschaum-Systeme sind Stand der Technik und werden ausführlich in Becker/Braun: Kunststoff-Handbuch, Band 7, (Herausgeber Günter Oertel), Carl Hanser Verlag, München, Wien, 1983, auf den Seiten 235 - 245 beschrieben.

Es sind aber auch andere an sich bekannte Verfahren zur Herstellung der erfindungsgemäßen Kunststoff-Verbundkörper möglich.

Das fertige Formteil kann gegebenenfalls nach üblichen Methoden nachbehandelt werden, wie z.B. durch Beschichten oder Lackieren der Außenhaut, insbesondere wenn diese aus einem nicht lichtechten System besteht. Es ist auch möglich, eine Außenlackierung durch "in-mold-coa ting" oder - "painting" aufzubringen. Hierzu wird .z.B. beim "Slush-molding"-Verfahren die Form mit einem flüssigen Lacksystem gefüllt und anschließend wieder entleert. Der zurückbleibende dünne Film wird beim Aufheizen der Form für die Bildung der Außenschicht aus dem Einkomponentensystem ausgehärtet und bildet anschließend einen innigen Verbund mit der Außenschicht.

Die erfindungsgemäßen Verbundkunststoffe zeichnen sich aus durch hervorragende Haftung zwischen Außenschicht und Kunststoff-Schaumstoff, durch eine sehr gute Temperaturbeständigkeit des Verbundes und durch eine einfache und schnelle Herstellbarkeit der Außenhaut.

### Beispiel 1

1) Einkomponentensystem für Außenhaut 100 Gew.-Teile

eines Polyoxypropylenglykolpolyethers mit endständigen aromatischen Aminogruppen und einer NH-Zahl von 47,5 (hergestellt nach DOS 2 948 419 durch Hydrolyse eines Prepolymers aus 1 Mol Polyoxypropylenglykol, MG 2000 und 2 Mol 2,4-Toluylendiisocyanat) und

0,2 Gew.-Teile

4,4′-Diamino-3,3′-dimethyl-dicyclohexylmethan werden mit

22,2 Gew.-Teilen

eines Harnstoffgruppen enthaltenden, feinteiligen Polyisocyanats vermischt, welches durch Umsetzung von 2 Mol 2,4-Toluylendiisocyanat mit 1 Mol Wasser in Aceton erhalten wurde und einen NCO-Gehalt von 20,35 % aufwies. Bei ca. 110°C härtet die flüssige Abmischung zu einem Polyurethanelastomer, welches folgende Eigenschaften aufweist:

Zugfestigkeit (DIN 53 504): 13,2 MPa
Reißdehnung (DIN 53 504): 450 %
Weiterreißfestigkeit (DIN 53 515): 32,1 kN/m
Shore Härte (DIN 53 505): A: 93; D: 43
Elastizität (DIN 53 512): 42 %

2) Hartschaumsystem für Hinterfüllung

Polyolgemisch: OH-Zahl 500, Wassergehalt = 0,3 Gew.-%, Viskosität 2500 mPas bei 25°C, bestehend aus:

1. 60 Gew.-Teilen eines Polyethers der OH-Zahl 860, der durch Anlagerung von Propylenoxid an Trimethylolpropan erhalten wurde, und

2. 40 Gew.-Teilen eines Polyethers der OH-Zahl 42, der durch Anlagerung eines Gemisches von Propylenoxid und Ethylenoxid an ein Gemisch aus Trimethylolpropan und Propylenglykol (Mol-Verhältnis = 3:1) erhalten wurde;

1,0 Gew.-Teilen eines handelsüblichen Polysiloxan-Polyalkylenoxid-Blockcopolymerisats als Schaumstabilisator; 3,0 Gew.-Teilen N-Dimethyl-benzylamin und 0,5 Gew.-Teilen Tetramethyl-guanidin als Katalysatoren; 3,0 Gew.-Teilen Amidamin-Ölsäuresalz, hergestellt aus 1 Mol 3-Dimethylaminopropylamin-1 und 2 Mol Ölsäure, als inneres Trennmittel; 0,2 Gew.-Teilen 85 %ige wäßrige ortho-Phosphorsäure als Reaktionsverzögerer. Polyisocyanat:

durch Phosgenierung von Anilin-Formaldehyd-Kondensaten erhaltenes Polyisocyanat mit einer Viskosität von 130 mPas bei 25°C und einem NCO-Gehalt von 31 Gew.-%.

Mischungsverhältnis:

100 Gew.-Teile Polyolgemisch werden mit einem Gemisch aus 133 Gew.-Teilen des Polyisocyanats und 10 Gew.-Teilen Trichlorfluormethan vermischt.

Startzeit:

14 Sekunden

Abbindezeit:

29 Sekunden

3) Apparatur: Temperierbare Stahlklappform mit einem Formvolumen von 20 × 20 × 1 cm³

4) Herstellung des Verbundmaterials

Zunächst wird die auf 150°C temperierte Stahlform an den mit dem Formteil in Berührung kommenden Formwänden mit dem Trennmittel Indrosil 2000, Fa. Budroma Chemikalien, D 6232 Bad Soden 2, Postfach 2228, eingesprüht und dann mit einer ca. 1 mm dicken Schicht aus dem Einkomponentensystem für die Außenhaut versehen.

Hierzu wird die pastöse, im Vakuum entgaste Einkomponentensystemabmischung mit Hilfe eines flachen Pinsels auf die Formwand aufgetragen, wobei das System innerhalb weniger Sekunden zu einem dünnen, flexiblen Film erstarrt. Der Vorgang wird so oft wiederholt, bis die gewünschte Schichtdicke auf der Formwand erreicht ist.

Anschließend läßt man die Form auf 60°C abkühlen und füllt dann das Gemisch zur Bildung des Hartschaums ein. Dieses wird unmitelbar zuvor durch intensives Vermischen der Komponenten A und B des Hartschaumsystems hergestellt. Man beläßt das Gesamtmaterial ca. 10 min in der auf 60°C temperierten Form und kann dann eine Verbundplatte entformen, die eine ca. 1 mm dicke, massive, elastische Außenhaut und eine daran extrem gut haftende, ca. 8 mm dicke, harte, geschäumte Kernschicht aufweist.

Gesamtrohdichte: 445 kg/m³

Oberflächenhärte: Shore D: 43; Shore A; 93

Beispiel 2

1) Einkomponentensystem für Außenhaut: Ein Gemisch aus

90 Gew.-Teilen

eines Polyoxypropylenglykolpolyethers mit endständigen aromatischen Aminogruppen und einer NH-Zahl von 47.5 (hergestellt nach DOS 2 948 419 durch Hydrolyse eines Prepolymers aus 1 Mol Polyoxypropylenglykol, MG 2000, und 2 Mol 2,4-Toluylendiisocyanat),

10,6 Gew.-Teilen

eines Polyethers, der durch Addition von Propylenoxid und Ethylenoxid an Trimethylolpropan erhalten wurde, OH-Zahl 28, Funktionalität 3, MG 6000,

0,075 Gew.-Teilen

Jeffamin T 403® (trifunktioneller Polyoxypropylenglykolpolyether mit primären Aminoendgruppen, Molekulargewicht 403) der Fa. Texaco und

0,2 Gew.-Teilen

Dimethylbenzylamin wird intensiv mit

19,0 Gew.-Teilen

eines Harnstoffgruppen-haltigen Diisocyanats auf Basis 2.4-Toluylendiiso cyanat, welches nach der DOS 3 438 527, Beispiel 8c hergestellt wurde, vermischt. Bei 90°C härtet das flüssige Gemisch zu einem Polyurethanelastomer mit folgenden Eigenschaften:

Zugfestigkeit (DIN 53 504): 11,4 MPa

Reißdehnung (DIN 53 504): 200 %

Weiterreißfestigkeit (DIN 53 515): 31,8 kN/m

Shore Härte (DIN 53 505): A: 88; D: 32

Elastizität (DIN 53 512): 45 %

2) Schaumsystem für Hinterfüllung Polyolkomponente:

100 Gew.-Teile eines trifunktionellen Polyoxypropylenglykolpolyethers mit 17 Gew.-% Polyoxyethylen-Endblock, Molekulargewicht 6000, OH-Zahl 28

2 Gew.-Teile Wasser

0,5 Gew.-Teile eines Metallcarboxylats als Katalysator (K-Acetat)

2 Gew.-Teile Haftvermittler TN (Polyester auf Basis Adipinsäure, Hexandio -1,6 und Trimethylolpropan)

Polyisocyanant:

durch Phosgenierung von Anilin-Formaldehyd-Kondensation erhaltenes Polyisocyanat mit einer Viskosität ≤200 mPas bei 25°C und einem NCO-Gehalt von ca. 31 Gew.-%.

Mischungsverhältnis: 100 Gew.-Teile der Polyolkomponente werden mit

36 Gew.-Teilen der Polyisocyanatkomponente vermischt.

Startzeit:

25 Sekunden

Steigzeit:

4 min 45 Sekunden

Abbindezeit:

4 min 30 Sekunden

3) Apparatur

Es wird eine typische "Slush-molding"-Apparatur eingesetzt, deren prinzipieller Aufbau auf Seiten 14 und 15 dieser Anmeldung beschrieben ist. Die Apparatur besteht aus einer ca. 300 $\times$ 300 $\times$ 100 mm großen, geformten Oberschale und einem topfförmig ausgebildeten Unterteil. Beide Formteile werden durch Spannvorrichtungen zusammengehalten und mittels einer Flachdichtung an den Kontaktstellen zwischen den beiden Schalen abgedichtet. Die Form wird in einer fixierbaren Drehvorrichtung gelagert. An der oberen Kante der Unterschale befindet sich ein temperierbarer Wasserkanal.

Desweiteren wird ein üblicher Heizschrank eingesetzt, der dazu dient, die konturgebende Oberschale auf Arbeitstemperatur zu erhitzen und die gebildeten Außenhaut-Formteile nachzutempern.

4) Versuchsdurchführung

In das Formunterteil wird das entgaste, auf 25°C temperierte Einkomponentensystem (s. Punkt 1) in einer solchen Menge eingefüllt, daß die Oberschale zumindest vollständig gefüllt werden kann.

Die obere Kante des Formunterteils wird mittels Wasser auf 60°C gehalten, um einen Wärmeübergang zwischen erhitzter Oberschale und Formunterteil zu unterbinden.

Die erhitzte Oberschale wird nach Einlegen der Flachdichtung auf das Formunterteil gespannt und die Gesamtform um 180° um die horizontale Achse geschwenkt. Hierbei läuft das Einkomponentensystem aus dem Formunterteil in die erhitzte Oberschale und beginnt sich an der Wandung der Oberschale zu verfestigen.

Die Wandstärke des Elastomers kann durch die Temperatur der Oberschale und die Kontaktzeit der erhitzten Oberschale mit dem Einkomponentensystem gesteuert werden.

Nach einer vorher festgelegten Zeit (hier 30 Sekunden) wird die zweiteilige Form wieder in den Ausgangszustand zurückgeschwenkt.

Während der nun folgenden, sogenannten Abtropfzeit (hier 30 - 60 Sekunden), läuft das nicht ausgehärtete Einkomponentensystem in das Formunterteil zurück. Das an der Formwand der Oberschale festgewordene Einkomponenten system wird mit der Oberschale vom Formunterteil getrennt und in der Oberschale 10 Minuten bei 120°C im Heizschrank getempert und dann im abgekühlten Zustand entformt.

Das Außenhaut-Formteil wird nun in eine, die gleiche Kontur wie die Oberschale aufweisende, übliche Schäumform eingelegt und mit dem unter Punkt 2 genannten Polyurethansystem nach üblichen Verfahren hinterschäumt.

**Ansprüche**

1. Kunststoff-Verbundkörper, bestehend aus
   1. einem Kunststoff-Schaumstoff und
   2. einer mit ihm verbundenen, gegebenenfalls geschäumten Polyurethanaußenschicht, die durch thermisches Aushärten eines lagerstabilen, reaktionsfähigen Polyurethan-Einkomponentensystems, enthaltend
   A) feinteilige Polyisocyanate, deren NCO-Gruppen zu 0.1 bis 25 Äquivalentprozent in an sich bekannter Weise durch Reaktion mit Polyaminen, Hydrazinen, Alkylhydrazinen, Hydraziden, Amidinen und/oder Guanidinen desaktiviert worden sind,
   B) Polyamine und/oder Polyole mit Molekulargewichten von 400 bis 8000, vorzugsweise 800 bis 3000,
   C) gegebenenfalls aromatische Polyamine mit Molekulargewichten von 108 bis 399 und/oder aliphatische und/oder cycloaliphatische Polyole mit Molekulargewichten von 62 bis 399 als Kettenverlängerungsmittel,
   D) gegebenenfalls Katalysatoren und
   E) gegebenenfalls Hilfs-und Zusatzstoffe, hergestellt worden ist.

2. Kunststoff-Verbundkörper nach Anspruch 1, dadurch gekennzeichnet, daß der Kunststoff-Schaumstoff ein Polyurethan-Schaumstoff ist.

3. Verfahren zur Herstellung eines Kunststoff-Verbundkörpers, bestehend aus
   1. einem Kunststoff-Schaumstoff und
   2. einer gegebenenfalls geschäumten Polyurethanaußenschicht, dadurch gekennzeichnet, daß ein lagerstabiles, reaktionsfähiges Polyurethan-Einkomponentensystem, enthaltend
   A) feinteilige Polyisocyanate, deren NCO-Gruppen zu 0,1 bis 24 Äquivalentprozent in an sich bekannter Weise durch Reaktion mit Polyaminen, Hydrazinen, Alkylhydrazinen, Hydraziden, Amidinen und/oder Guanidinen desaktiviert worden sind,
   B) Polyamine und/oder Polyole mit Molekulargewichten von 400 bis 8000, vorzugsweise 800 bis 3000,
   C) gegebenenfalls aromatische Polyamine mit Molekulargewichten von 108 bis 399 und/oder aliphatische und/oder cycloaliphatische Polyole mit Molekulargewichten von 62 bis 399 als Kettenverlängerungsmittel,
   D) gegebenenfalls Katalysatoren und
   E) gegebenenfalls übliche Hilfs-und Zusatzstoffe,

thermisch ausgehärtet und mit dem Kunststoff-Schaumstoff verbunden wird.

4. Verfahren nach Anspruch 3, dadurch gekennzeichnet, daß man zuerst an der inneren Wandung einer Form die Polyurethanaußenschicht erzeugt, sie dann entformt, die so erhaltene Polyurethanschicht in eine zweite Form einbringt und darin die Polyurethanaußenschicht mit dem Kunststoff-Schaumstoff hinterschäumt.